# EUROPEAN PATENT APPLICATION

(11) **EP 0 989 765 A1**
(43) Date of publication of application: **29.03.2000**
(21) Application number: 99307296.6
(22) Date of filing: 14.09.1999
(51) Int. Cl.: H04Q 7/22, H04Q 7/38

(54) **Method for allocating resources during high speed data transmission in a wireless telecommunications system**

(30) Priority: 24.09.1998 US 159739
(71) Applicant: LUCENT TECHNOLOGIES INC., Murray Hill, New Jersey 07974-0636 (US)
(72) Inventor: Knisely, Douglas N., Wheaton, Illinois 60187 (US); Liu, Chung-Zin, Naperville, Illinois 60565 (US); Marks, Robert Jerrold, Homewood, Illinois 60430 (US)
(74) Representative: Buckley, Christopher Simon Thirsk

(57) **Abstract**

A wireless telecommunications system includes a selection distribution unit (SDU) for receiving high speed data. The high speed data is stored in a buffer queue within the SDU prior to allocation of high speed data resources by a base station controller. Signaling between the base station controller and the SDU ensures that high speed data resources are not prematurely released. More particularly, constant monitoring of high speed data levels within the buffer queue triggers specific signaling from the SDU to the base station controller to guide the allocation of high speed data resources.

## Description

### Technical Field:

This invention relates to telecommunications systems, and more particularly, to efficiently accommodating high speed data received in wireless telecommunications systems.

### Background of the Invention:

The role of communications in modem society has evolved from one of convenience to necessity. It is now common for users of telecommunications services to demand almost instantaneous access to information. This expectation is fueled by the exponential growth of relatively new types of telecommunications services, such as the Internet. Another rapidly growing form of telecommunications services is wireless telecommunications.
More particularly, the decreased cost associated with mobile handsets has made wireless telecommunications a viable option for almost everyone. Further, the reliability and quality of transmission associated with wireless communications has transformed from being merely acceptable to very comparable with the wireline network (also known as the public switched telephone network or PSTN). For these reasons, many mobile subscribers rely on their mobile handsets for voice and data communications.

Almost all wireless telecommunications systems in existence today are designed with voice transmission as the primary function. Indeed, the air interface, switching system and wireline infrastructure connecting base station controllers to the public switched telephone network have been optimized for voice transport. This is true for analog wireless systems as well as new standards based on digital systems such as time division multiple access (TDMA) and code division multiple access (CDMA).

Recently, high speed data transmission services have generated great interest with respect to wireless systems. Although many functions in the wireless infrastructure (e.g., billing, authentication, routing, network management) are similar for both voice and data, accommodating high speed data transmission services in an infrastructure designed for voice transmission causes noticeable increases in error rates, inefficiency and unreliability.

Therefore, there is a continual need to enhance the quality and efficiency with which high speed data is transmitted in wireless telecommunications systems.

### Summary of the Invention:

This need is addressed and a technological advance is achieved in the wireless telecommunications art by a recognition that selectively allocating resources for accommodating high speed data in a wireless telecommunications system significantly enhances efficiency. More particularly, high speed data destined for a particular mobile user is received and dynamically quantified prior to delivery to ensure the efficient allocation of resources deployed by a base station controller for high speed data transmission.

There are two types of data handled by a wireless telecommunications system. Low speed data is a predictable form of data which emulates voice. For this reason, resource allocation for low speed data transmission is processed much like voice transmission. In other words, resources are assigned on a per call basis for low speed data delivery. High speed or "bursty data" is unpredictable in arrival time and duration. Allocation of resources on a per call basis for high speed data is not efficient. This is because per call allocation results in multiple instances of resource setups, one for each time a new data burst arrives. Accordingly, high speed data directed to a particular mobile user is stored in a queue until a sufficient amount of data is available for allocation of a resource by a base station controller. When the data reaches this predetermined amount (also known as the "high data mark"), resources are allocated by the serving base station controller and the bursty data is delivered to the mobile user. At the end of this delivery, resources are automatically released. If another data burst arrives, the data is gathered in the queue again and the new data burst is delivered to the mobile user after another allocation of resources by the base station controller.

In the preferred embodiment of the present invention, high speed data is received in a selection distribution unit (SDU) of a wireless telecommunications system. The SDU stores the data received and upon reaching a "high data mark", a serving base station controller allocates resources for delivery of the high speed data to a designated mobile user. Significantly, the base station controller does not automatically release air link resources upon completion of a high speed data burst. Instead, the resources dedicated for a particular high speed data transmission are held if it is efficient to do so.

There are three significant data levels in the SDU. A "high data mark" requires a serving base station controller to allocate resources for transmitting a data burst which has been queued in the SDU. Upon completion of transmission of this data burst, the serving base station controller expects to continue receiving high speed data or an SDU status message. If the base station controller receives a "low data mark" message, the base station controller releases resources upon completion of the transmission of the data burst currently being processed. In other words, a low data mark indicates that the SDU has not received any further incoming high speed data. If the high speed data level is above the low data mark but below the high data mark, the base station is directed to hold resources as more data is expected to be transmitted. A "zero (0) data mark" indicates that there is no high speed data in the SDU buffer and that the data transmission is complete.

Implementation of the present invention requires additional signaling between a base station controller and an SDU. More particularly, the SDU notifies the base station controller when incoming high speed data surpasses a predefined low data mark so that resources can be continued to be held by the base station controller. Advantageously, the holding of previously allocated resources by a base station controller enhances the efficiency of high speed data transmissions. This is because the resources are no longer automatically torn down and reset simply because an existing high speed data burst has been completed. In other words, resources for high speed data transmissions are not prematurely released.

### Brief Description of the Drawings:

FIG. 1 is a simplified block diagram of a wireless telecommunications system in which the present invention may be practiced;
FIG. 2 is a simplified block diagram of a selection distribution unit and base station controller; and
FIGs. 3A and 3B are flow diagrams depicting the steps performed in a wireless telecommunications system in accordance with the preferred embodiment of the present invention.

### Detailed Description:

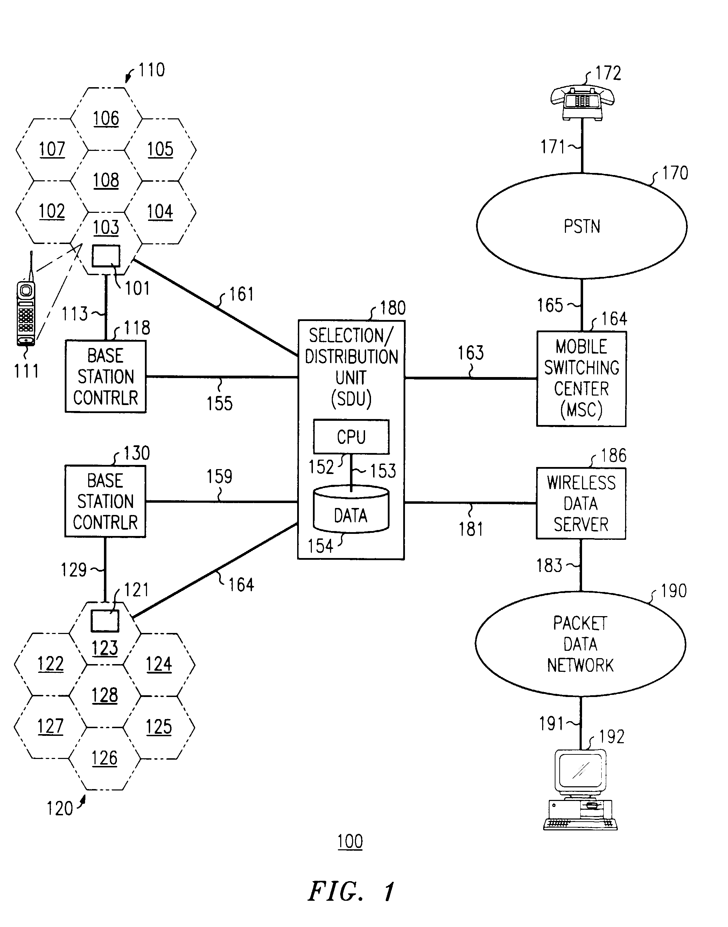

FIG. 1 shows wireless telecommunications system 100 including cell site clusters 110 and 120. Cell site cluster 110 comprises a plurality of cell sites 102, 103, 104, 105, 106, 107 and 108. Cell site cluster 120 comprises individual cell sites 122, 123, 124, 125, 126, 127 and 128. Each cell site includes an antenna and resources for serving mobile subscribers. In this embodiment, the resources are air link resources for delivering high speed data to a mobile unit. Each cell site is also served by a base station controller (BSC) which allocates air link resources. For clarity, only cell sites 103 and 123 are described in detail. Cell site 103 includes antenna station 101 and is served by BSC 118 via link 113. Cell site 123 includes antenna 121 and is interconnected to BSC 130 via link 129.

In this example, BSC 118 maintains control link 155 to SDU 180 while BSC 130 maintains control link 159 to the SDU. SDU 180 maintains high speed data links 161, 164 to cell sites 103 and 123, respectively. These high speed data links enable high speed data delivery to the antenna station and mobile users. SDU 180 comprises central processing unit 152 interconnected via link 153 to database 154. SDU 180 is interconnected to the public switched telephone network (PSTN) 170 and packet data network 190 via mobile switching center 164 and wireless data server 186, respectively. More particularly, SDU 180 maintains link 163 to mobile switching center 164 which is, in turn, connected to the PSTN via link 165. Similarly, SDU 180 maintains link 181 to wireless data server 186 which is interconnected to packet data network 190 via established link 183. In this example, PSTN 170 serves customer premises equipment 172 via subscriber line 171. Packet data network 190 serves computing system 192 via broadband link 191.

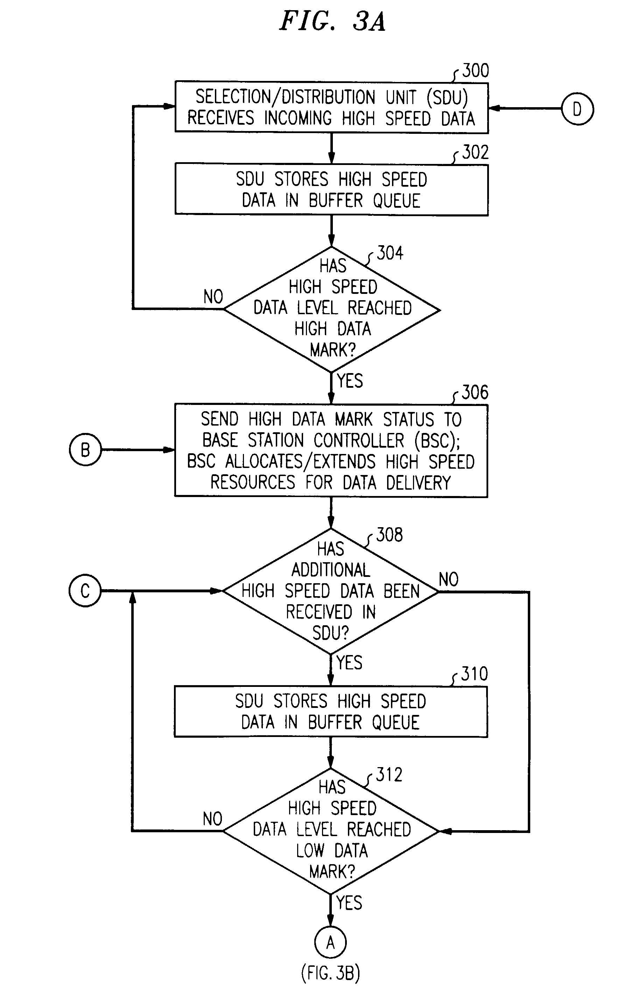

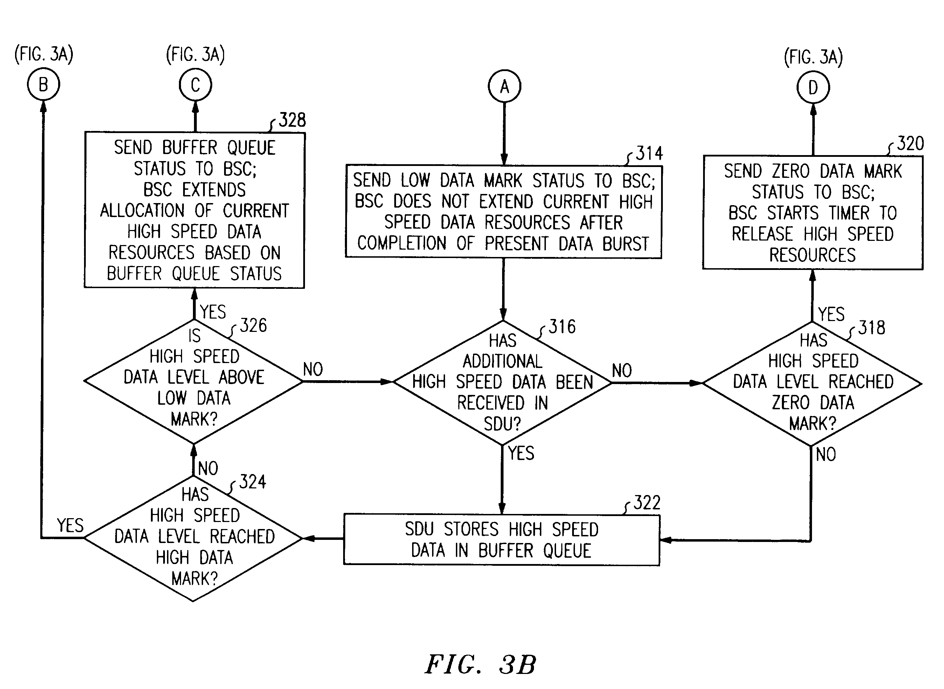

A mobile unit located within a cell site (such as mobile unit 111 located within cell site 103), receiving high speed data from an external source, requires the establishment of air link resources to accommodate the high speed data transmission. More particularly, high speed data transmissions are received in SDU 180 from packet data network 190 via wireless data server 186. During operation, SDU 180 quantifies the incoming data designated for mobile unit 111 and notifies BSC 118 that air link resources should be allocated when the quantity of high speed data received reaches a high data mark. As described in detail in FIGs. 3A and 3B, the BSC is instructed to extend (or continue to hold) current air link resources when the present data burst has been transmitted but sufficient additional incoming high speed data is received in the SDU. In other words, the function of the SDU is to serve as an intelligent gateway between BSCs and packet data networks, such as the Internet. A more detailed description of SDUs and their functionality can be found in patent applications serial nos. 08/881192, 08/881779, 08/881639, and 08/881190 assigned to Lucent Technologies Inc. and incorporated by reference herein.

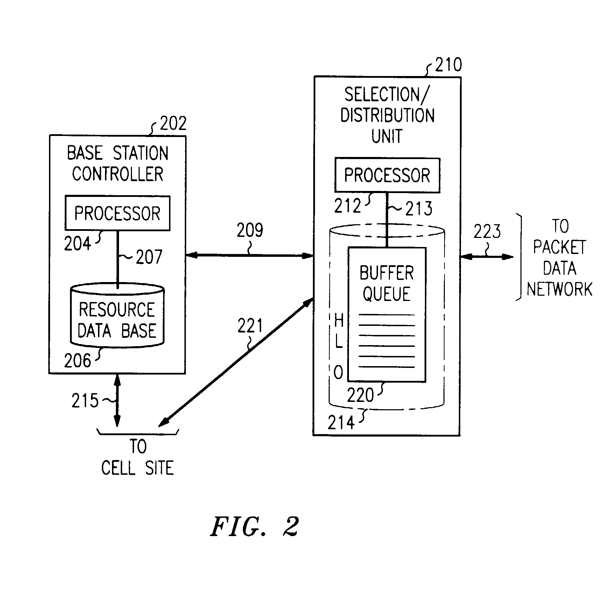

FIG. 2 shows a more detailed diagram of a BSC and SDU. More particularly, BSC 202 comprises processor 204 interconnected to resource database 206 via data link 207. Link 215 interconnects the BSC to cell site equipment. SDU 210 includes processor 212 interconnected to database 214 via data link 213. Shown within database 214 is buffer queue 220 and a graphical representation of data (horizontal lines). High, low and zero data marks are designated by "H", "L" and "0", respectively. Signaling link 209 interconnects base station controller 202 to SDU 210. Also shown is high speed data link 221 to cell site equipment and link 223 to a packet data network.

SDU 210 receives high speed data over link 223 from an external source, such as a packet data network. This incoming high speed data is stored in dynamic queue buffer 220 in database 214 until the data level reaches the high data mark ("H"). At the high data mark, SDU 210 sends a signal over signaling link 209 to base station 202 indicating that incoming high speed data is available for delivery to a mobile unit At this point, BSC 202 allocates air link resources and the high speed data is transmitted in a burst to a designated mobile unit. In accordance with the preferred embodiment, if SDU 210 receives additional incoming high speed data (after the initial data burst) which fills database 214 above a low data mark (but not quite to the high data mark), SDU 210 instructs BSC 202 to hold the allocated air link resource as more incoming high speed data is available for transmission to the mobile user. If the high speed data level in the SDU database is at or below the low data mark ("L"), SDU 210 notifies base station controller 202 that the low data mark has been reached and that the base station should release the applied air link resources upon completion of the present data burst. If the amount of incoming high speed data is sufficient to maintain a continual high data mark within SDU 210, base station controller 202 continues to apply air link resources and may even apply additional resources for the delivery of the incoming high speed data to the designated mobile unit. In some cases, the BSC queries the SDU at some predetermined point during a high speed data burst transmission if no status has been received from the SDU.

The amount of incoming high speed data is continually monitored by SDU 210 to determine whether the data within database 214 is at or below the low data mark. Only if the amount of high speed data within database falls below the low data mark is the air link resource applied by the base station controller dropped. In other words, so long as the incoming high speed data is above the low data mark, the BSC delivering the high speed data to a designated mobile unit will continue to hold its current high speed air link resource. In this manner, air link resources are not unnecessarily dropped and reapplied as additional amounts of incoming high speed data are received. The process steps performed by an SDU and BSC in a wireless telecommunications system are described in detail in the flow diagrams of FIGs. 3A and 3B.

FIGs. 3A and 3B are flow diagrams depicting the steps performed in a wireless telecommunications system in accordance with the preferred embodiment of the present invention. For purposes of example, assume that these steps are performed in wireless telecommunication system 100.

The process begins in step 300 in which SDU 180 receives incoming high speed data from a packet data network. The process continues to step 302 in which the SDU stores the high speed data in buffer queue 220. In decision step 304, the SDU determines whether the level of incoming high speed data has reached a high data mark. If the outcome of decision step 304 is a "NO" determination, the process returns to step 300 in which the SDU buffer queue continues to receive incoming high speed data. If the outcome of decision step 304 is a "YES" determination, the process continues to step 306 in which the SDU sends a high data mark status message to a BSC, such as BSC 118. In response to receipt of the high data mark message, the BSC allocate (or in cases of high volume of high speed data, extends (adds)) high speed data resources for delivery of the data to a designated mobile unit. Normally, allocation of high speed data resources includes allocation of high speed air link resources which allow delivery of high speed data to the designated mobile unit. After the high speed resources have been allocated, the process continues to decision step 308 in which the SDU determines whether additional high speed data has been received. If the outcome of decision step 308 is a "YES" determination, the process continues to step 310 in which the SDU stores the additional high speed data in its buffer queue 220. If the outcome of decision step 308 is a "NO" determination, the process continues to step 312 in which the SDU determines whether the high speed data level has reached a low data mark. If the outcome of decision step 312 is a "NO" determination, the process returns to decision step 308 until additional high speed data has been received. If the outcome of decision step 312 is a "YES" determination, the process continues through connector "A" to FIG. 3B and to step 314 in which the SDU extends a low data mark status to the BSC. In response to receiving the low data mark status message, the BSC does not extend its currently applied high speed data resources after completion of the present data burst. In other words, the BSC does not extend or add high speed data resources after completion of the present data burst.

The process then continues to decision step 316 in which the SDU determines whether additional high speed data has been received. If the outcome of decision step 316 is a "NO" determination, the process continues to decision step 318 in which the SDU determines whether the high speed data level has reached a "zero data mark". The zero data mark implies that there is no more high speed data within the buffer queue. If the outcome of decision step 318 is a "NO" determination, the process continues to step 322 described below. If the outcome of decision step 318 is a "YES" determination, the process continues to step 320 in which the SDU sends a zero data mark status message to the BSC. In response to receiving the zero data mark status level, the BSC commences a timer which counts down to release of all high speed data resources currently held by the BSC. The process then returns through connector "D" to step 300 in FIG. 3A in which the entire process is reiterated with new incoming high speed data.

If the outcome of decision step 316 is a "YES" determination, the process continues to step 322 in which the SDU stores the high speed data in its buffer queue. In decision step 324, the SDU determines whether the level of high speed data stored in the buffer queue has reached a high data mark. If the outcome of decision step 324 is a "YES" determination, the process returns through connector "B" to step 306 described in FIG. 3A. If the outcome of decision step 324 is a "NO" determination, the process continues to decision step 326 in which the SDU determines whether the high speed data level is above the low data mark level. If the outcome of decision step 326 is a "YES" determination, the process continues to step 328 in which the SDU sends the buffer queue status to the BSC. More particularly, the SDU sends the exact high speed data level within the buffer queue to the BSC. In response to receiving the buffer queue status, the BSC extends the allocation of its current high speed data resources for a time proportionate to the high speed data level in the buffer queue. The process then returns through connector "C" to decision step 308 in FIG. 3A. If the outcome of decision step 326 is a "NO" determination, the process returns to decision step 316 described above.

In this manner, the level of high speed data received in an SDU is monitored and gauged so that a BSC can properly allocate high speed data resources. More particularly, a determination of the amount of high speed data received at any given time is used to determine the level of high speed data resources to be applied by the BSC. If the level of incoming high speed data justifies continued use of high speed data resources, these resources are not released but continue to be applied until the use of the resource is no longer required. The resulting efficiency associated with the judicious allocation of high speed data resources allows all mobile users to receiver faster high speed data services from the wireless telecommunications system.

Although this invention has been described with respect to illustrative embodiments, those skilled in the art may devise numerous other arrangements without departing from the scope of the invention as defined in the following claims.

## Claims

1. A wireless telecommunications system comprises:
a base station controller (BSC) interconnected to a selection distribution unit (SDU);
the SDU interconnected to a packet data network for receiving high speed data and interconnected to transmission equipment for delivering high speed data to a particular mobile unit; and
the SDU including means for allocating resources associated with high speed data transmission equipment depending on the amount of high speed data received from a packet data network.

2. The wireless telecommunications system of claim 1 wherein the high speed data transmission equipment comprises air link resource equipment disposed within a cell site of the wireless telecommunications system.

3. The wireless telecommunications system of claim 1 wherein the BSC is interconnected to the SDU via a control link for exchanging messages.

4. The wireless telecommunications system of claim 1 wherein the SDU further comprises a buffer queue for storing incoming high speed data from a packet data network.

5. The wireless telecommunications system of claim 4 wherein the buffer queue has predetermined high speed data levels.

6. The wireless telecommunications system of claim 4 further comprising a predetermined high speed data level within the buffer queue for triggering messaging from the SDU to the BSC.

7. A method for delivering high speed data to a mobile unit comprises:
receiving high speed data in a buffer queue of a selection distribution unit (SDU);
a base station controller (BSC) allocating high speed data resources in response to receiving a high data mark message from the SDU; and
the BSC holding allocated high speed data resources in response to receiving a message from the SDU.

8. A method for efficiently allocating high speed data resources in a wireless telecommunications system comprises:
receiving high speed data in a buffer queue;
holding the high speed data in the buffer queue until a sufficient amount justifies allocation of high speed resources;
allocating high speed resources for delivering the high speed data to a mobile unit; and
holding the allocated high speed resources to the mobile unit if additional incoming high speed data is received in the buffer queue.

9. The method of claim 8 wherein holding the high speed resources comprises the steps of:
receiving a predetermined amount of data within the buffer queue; and
extending a signal to a base station controller for controlling allocation of high speed data resources to the mobile unit.

10. The method of claim 8 further comprising:
releasing allocated high speed resources when there is an insufficient amount of high speed data contained in the buffer queue.
